(19) Europäisches Patentamt
European Patent Office
Office européen des brevets

(11) **EP 4 510 489 A1**

(12) **EUROPEAN PATENT APPLICATION**
published in accordance with Art. 153(4) EPC

(43) Date of publication:
**19.02.2025 Bulletin 2025/08**

(21) Application number: **23795270.0**

(22) Date of filing: **23.04.2023**

(51) International Patent Classification (IPC):
**H04L 5/00** (2006.01)    **H04L 27/26** (2006.01)
**H04W 28/02** (2009.01)

(52) Cooperative Patent Classification (CPC):
**H04L 5/00; H04L 27/26; H04W 28/02**

(86) International application number:
**PCT/CN2023/090045**

(87) International publication number:
**WO 2023/207837 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.04.2022  CN 202210455026
04.11.2022  CN 202211379928

(71) Applicant: **Huawei Technologies Co., Ltd.
Shenzhen, Guangdong 518129 (CN)**

(72) Inventors:
• **HUANG, Xiuxuan
Shenzhen, Guangdong 518129 (CN)**
• **LI, Xinxian
Shenzhen, Guangdong 518129 (CN)**
• **DING, Mengying
Shenzhen, Guangdong 518129 (CN)**
• **PENG, Jinlin
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57)    A communication method and apparatus are provided. The method includes: A terminal receives first control information from a network device. The first control information supports both single-carrier scheduling and multi-carrier scheduling. The first control information includes a first field. The first field indicates the single-carrier scheduling or the multi-carrier scheduling. When the first field indicates the single-carrier scheduling, the terminal communicates with the network device on one scheduled carrier. Alternatively, when the first field indicates the multi-carrier scheduling, the terminal communicates with the network device on a plurality of scheduled carriers. According to the method and the apparatus in this application, the first field in the first control information may explicitly or implicitly indicate the single-carrier scheduling or the multi-carrier scheduling, and the network device does not need to additionally send a notification message, thereby reducing air interface overheads.

FIG. 5

## Description

## CROSS-REFERENCE TO RELATED APPLICATIONS

This application claims priorities to Chinese Patent Application No. 202210455026.X, filed with the China National Intellectual Property Administration on April 27, 2022 and entitled "COMMUNICATION METHOD AND APPARATUS", and to Chinese Patent Application No. 202211379928.6, filed with the China National Intellectual Property Administration on November 4, 2022 and entitled "COMMUNICATION METHOD AND APPARATUS", both of which are incorporated herein by reference in their entireties.

## TECHNICAL FIELD

Embodiments of this application relate to the field of communication technologies, and in particular, to a communication method and apparatus.

## BACKGROUND

Carrier aggregation (carrier aggregation, CA) is a technology in which two or more component carriers (component carriers, CCs) are aggregated to support a larger transmission bandwidth. Each CC corresponds to one independent cell. Usually, one CC may be equivalent to one cell. To efficiently use scattered spectrums, the CA supports aggregation between different CCs, for example, aggregation between CCs in a same bandwidth or different bandwidths, aggregation between adjacent or non-adjacent CCs in a same frequency band, or aggregation between CCs in different frequency bands. How to determine whether control information currently indicates single carrier scheduling or multi-carrier joint scheduling is a problem worth studying.

## SUMMARY

Embodiments of this application provide a communication method and apparatus, to determine whether first control information indicates single carrier scheduling or multi-carrier joint scheduling.

According to a first aspect, a communication method is provided. The method is performed by a terminal or a component (a processor, a chip, or the like) configured in the terminal. For example, the method is performed by the terminal. The method includes: The terminal receives first control information from a network device. The first control information supports both single-carrier scheduling and multi-carrier scheduling. The first control information includes a first field. The first field indicates the single-carrier scheduling or the multi-carrier scheduling. When the first field indicates the single-carrier scheduling, the terminal communicates with the network device on one scheduled carrier. Alternatively, when the first field indicates the multi-carrier scheduling, the terminal communicates with the network device on a plurality of scheduled carriers.

According to the foregoing method, the first field in the first control information may explicitly or implicitly indicate the single-carrier scheduling or the multi-carrier scheduling of the first control information, and the network device does not need to additionally send a notification message, to reduce air interface overheads.

In a design, the first field is a field independently configured for each carrier, and when the first field includes one piece of scheduling information, the first field indicates the single-carrier scheduling; when the first field includes a plurality of pieces of scheduling information, and the plurality of pieces of scheduling information are the same, the first field indicates the single-carrier scheduling; or when the first field includes a plurality of pieces of scheduling information, and the plurality of pieces of scheduling information are different, the first field indicates the multi-carrier scheduling.

In a current design, when the first field is a field independently configured for each carrier, and the first control information is for scheduling a plurality of carriers, the first field includes information corresponding to each carrier. For example, for an MCS field in the first control information, if the MCS field is a field independently configured for each carrier, the first control information is for scheduling N carriers, and the MCS includes N pieces of information, where the N pieces of information is in one-to-one correspondence with the N carriers. Therefore, for a field independently configured for each carrier, when the field includes scheduling information of a single carrier, single-carrier scheduling is determined; or when the field includes scheduling information of a plurality of carriers, multi-carrier scheduling is determined. It should be noted that in some cases, the first field includes a plurality of pieces of scheduling information, but the plurality of pieces of scheduling information are the same. In this case, single-carrier scheduling is determined. For example, the first field is an MCS field, and the MCS field includes information A corresponding to a carrier 1. In this case, the information A is copied into a plurality of pieces, and the plurality of pieces are carried in the MCS field. In other words, the MCS field includes the plurality of pieces of information A. In this case, even if the MCS field carries a plurality of pieces of scheduling information, it is considered that the MCS field indicates single-carrier scheduling. In this design, the single-carrier scheduling or the multi-carrier scheduling is determined by using a current design, and no information needs to be additionally added, to reduce overheads of the first control information.

In a design, the first field is a carrier indicator field, and the single-carrier scheduling or the multi-carrier scheduling is determined based on a size of the carrier indicator field.

In a design, the first field includes a bitmap, and the bitmap indicates the multi-carrier scheduling or the single-carrier scheduling.

In a design, the first field is a bandwidth part BWP indicator field, and the BWP indicator field indicates a first BWP. The method further comprises: determining that a scheduling manner corresponding to the first BWP is the single-carrier scheduling or the multi-carrier scheduling. For example, the terminal may determine, based on a correspondence between a BWP and a scheduling manner, that the scheduling manner corresponding to the first BWP is the single-carrier scheduling or the multi-carrier scheduling.

According to the foregoing method, the correspondence between the BWP and the scheduling manner is pre-bound. The network device may implicitly indicate different scheduling manners by indicating different BWPs, and the network device does not need to additionally indicate a scheduling manner, to reduce air interface overheads.

In a design, before receiving the first control information from the network device, the method further includes: receiving a radio resource control message from the network device. The radio resource control message includes a search space configured for a terminal. The search space includes the first control information and second control information. The second control information is control information that supports the single-carrier scheduling.

In the foregoing design, the first control information may be single DCI, and second DCI may be current legacy DCI. When the single DCI and the legacy DCI are configured in a same search space, the terminal may preferentially receive the single DCI, to ensure reception of the single DCI.

In a design, before receiving the first control information from the network device, the method further includes: receiving configuration information from the network device. The configuration information is for configuring a parameter $n_{MI}$ The parameter $n_{MI}$ may be for configuring a specific search space for multi-carrier joint scheduling. The configuration information may be RRC signaling. The method further includes: The UE determines an initial control channel element (CCE) position based on the parameter $n_{MI}$; determines a PDCCH candidate set based on the initial CCE position; and determines, based on the PDCCH candidate set, the search space specific to the multi-carrier joint scheduling.

Optionally, that the UE determines the initial CCE position based on the parameter $n_{MI}$ satisfies the following:

$$\text{CCE}_{\text{start}} = L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} + n_{MI} \right) \mod \left\lfloor \frac{N_{CCE,p}}{L} \right\rfloor \right\} + i$$

L represents a PDCCH aggregation level, where for a common search space, L = {4,8,16}, and for a UE-specific search space, L = {1,2,4,8,16}; $Y_{p,n_{s,f}^{\mu}}$ represents a frequency domain start position of the PDCCH candidate set; $N_{CCE,p}$ represents a quantity of CCEs in a p<sup>th</sup> CORESET; $m_{s,n_{CI}}$ represents a quantity of PDCCH candidate sets of corresponding $n_{CI}$ and a corresponding search space at an aggregation level of L; $M_{p,s,max}^{(L)}$ represents a maximum quantity of candidate sets in the p<sup>th</sup> CORESET and an s<sup>th</sup> search space at the aggregation level of L; $n_{CI}$ represents a cross-carrier indication for ensuring that a frequency domain conflict is avoided when PDCCH candidate sets on carriers with different subcarrier spacings are scheduled, and is indicated by a configured CIF in a cross-carrier scheduling configuration (CrossCarrierSchedulingConfi) of higher layer signaling, and if the CIF is not configured, $n_{CI}$ is 0; and i represents a CCE index (index) at the aggregation level of L, where i = 0,1, ..., L - 1.

In this design, a specific search space is defined for a plurality of jointly scheduled carriers, so that complexity of blind detection of the terminal can be reduced.

In a design, before receiving the first control information from the network device, the method further includes: determining an initial CCE position based on a parameter $n_{CI}$; determining a PDCCH candidate set based on the initial CCE position; and determining, based on the PDCCH candidate set, a search space specific to multi-carrier joint scheduling. For example, the parameter $n_{CI}$ may be extended from original 3 bits to 8 bits. When the parameter $n_{CI}$ indicates a value ranging from 8 to 255, the search space specific to the multi-carrier joint scheduling may be determined based on the value ranging from 8 to 255.

Optionally, the determining an initial CCE position based on a parameter $n_{CI}$ satisfies the following:

$$\mathrm{CCE_{start}} = L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} \right) mod \left\lfloor \frac{N_{CCE,p}}{L} \right\rfloor \right\} + i$$

For descriptions of parameters in the foregoing formula, refer to the foregoing descriptions. Details are not described again. In this design, a specific search space may also be defined for a plurality of jointly scheduled carriers, so that complexity of blind detection of the terminal can be reduced.

According to a second aspect, a communication method is provided. The method is performed by a network device or a component (a processor, a chip, or the like) configured in the network device. For example, the method is performed by the network device. The method includes: The network device sends first control information to a terminal. The first control information supports both single-carrier scheduling and multi-carrier scheduling. The first control information includes a first field. The first field indicates the single-carrier scheduling or the multi-carrier scheduling. When the first field indicates the single-carrier scheduling, the network device communicates with the terminal on one scheduled carrier. Alternatively, when the first field indicates the multi-carrier scheduling, the network device communicates with the terminal on a plurality of scheduled carriers.

According to the foregoing design, the network device may explicitly or implicitly indicate the single-carrier scheduling or the multi-carrier scheduling by using the first field in the first control information, and the network device does not need to additionally send a notification message, to reduce air interface overheads.

In a design, the first field is a field independently configured for each carrier, and when the first field includes one piece of scheduling information, the first field indicates the single-carrier scheduling; when the first field includes a plurality of pieces of scheduling information, and the plurality of pieces of scheduling information are the same, the first field indicates the single-carrier scheduling; or when the first field includes a plurality of pieces of scheduling information, and the plurality of pieces of scheduling information are different, the first field indicates the multi-carrier scheduling.

In a design, the first field is a carrier indicator field, and the single-carrier scheduling or the multi-carrier scheduling is indicated based on a size of the carrier indicator field.

In a design, the first field includes a bitmap, and the bitmap indicates the single-carrier scheduling or the multi-carrier scheduling.

In a design, the first field is a bandwidth part BWP indicator field, the BWP indicator field indicates a first BWP, and the first BWP indicates the single-carrier scheduling or the multi-carrier scheduling.

In a design, before sending the first control information to the terminal, the method further includes: sending a radio resource control message to the terminal. The radio resource control message includes a search space configured for the terminal. The search space includes the first control information or second control information. The second control information is control information that supports the single-carrier scheduling. Both the first control information and the second control information are scrambled by using a cell radio network temporary identifier C-RNTI.

Alternatively, the search space includes the first control information and second control information. The first control information is scrambled in a manner other than a C-RNTI. The second control information is scrambled by using a C-RNTI. Alternatively, when a plurality of carriers scheduled by using the first control information include a primary carrier and a secondary carrier, the search space includes a search space of the primary carrier and a search space of the secondary carrier. The search space of the primary carrier includes second control information. The search space of the secondary carrier includes the first control information and third control information. The first control information, the second control information, and the third control information are all scrambled by using a C-RNTI.

In a design, before the network device sends the first control information to the terminal, the method further includes: sending configuration information to the terminal. The configuration information is for configuring a parameter $n_{MI}$. The parameter $n_{MI}$ may be for configuring a specific search space for multi-carrier joint scheduling, to reduce complexity of blind detection of the terminal. Optionally, the configuration information may be RRC signaling.

According to a third aspect, a communication apparatus is provided. The apparatus is configured to implement the method in the first aspect, and includes corresponding functional modules or units, which are configured to implement the steps in the method in the first aspect. Functions may be implemented by hardware, or may be implemented by hardware executing corresponding software. The hardware or the software includes one or more modules or units corresponding to the foregoing functions.

According to a fourth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the first aspect.

According to a fifth aspect, a communication apparatus is provided. The apparatus is configured to implement the method in the second aspect, and includes corresponding functional modules or units, which are configured to implement the steps in the method in the second aspect. Functions may be implemented by hardware, or may be implemented by hardware executing corresponding software. The hardware or the software includes one or more modules or units corresponding to the foregoing functions.

According to a sixth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the second aspect.

According to a seventh aspect, a computer-readable storage medium is provided. The computer-readable storage medium stores a computer program or instructions. When the computer program or the instructions are run on a computer, the computer is enabled to perform the method in the first aspect.

According to an eighth aspect, a computer-readable storage medium is provided. The computer-readable storage medium stores a computer program or instructions. When the computer program or the instructions are run on a computer, the computer is enabled to perform the method in the second aspect.

According to a ninth aspect, a computer program product is provided. The computer program product includes a computer program or instructions. When the computer program or the instructions are run on a computer, the computer is enabled to perform the method in the first aspect.

According to a tenth aspect, a computer program product is provided. The computer program product includes a computer program or instructions. When the computer program or the instructions are run on a computer, the computer is enabled to perform the method in the second aspect.

According to an eleventh aspect, a system is provided. The system includes the apparatus in the third aspect or the fourth aspect and the apparatus in the fifth aspect or the sixth aspect.

## BRIEF DESCRIPTION OF DRAWINGS

FIG. 1 is a diagram of a communication system according to an embodiment of this application;
FIG. 2 is a diagram of self-carrier scheduling according to an embodiment of this application;
FIG. 3 is a diagram of cross-carrier scheduling according to an embodiment of this application;
FIG. 4 is a diagram of single DCI according to an embodiment of this application;
FIG. 5 is a flowchart of a communication method according to an embodiment of this application;
FIG. 6 is a flowchart of downlink scheduling according to an embodiment of this application;
FIG. 7 is a flowchart of uplink scheduling according to an embodiment of this application;
FIG. 8 and FIG. 9 each are a diagram of SSs corresponding to a Pcell and an Scell according to an embodiment of this application; and
FIG. 10 and FIG. 11 each are a diagram of an apparatus according to an embodiment of this application.

## DESCRIPTION OF EMBODIMENTS

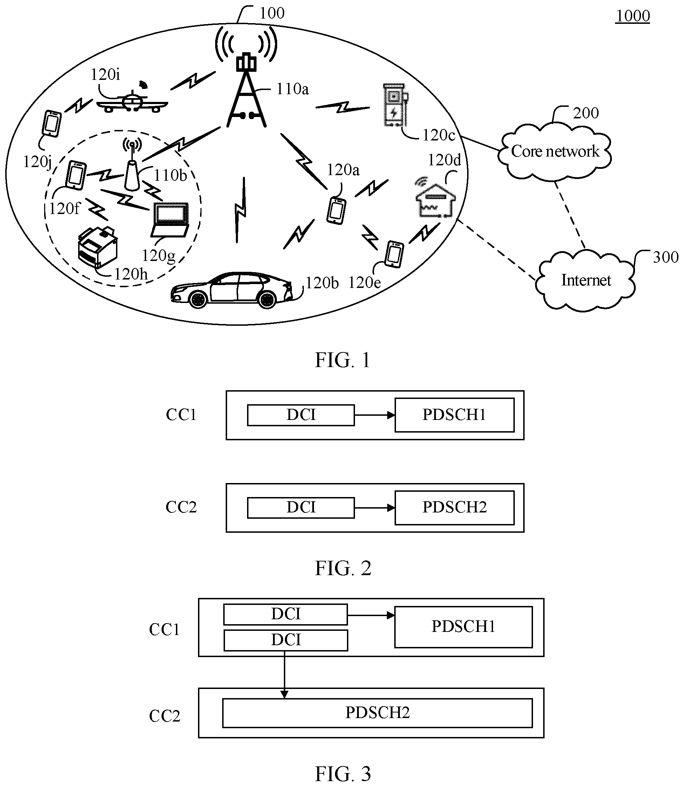

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or a part of functions of a core network device and a part of functions of the access network device may be integrated into one physical device. Terminals may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a CU control plane (CU control plane, CU-CP) module, or a CU user plane (CU user plane, CU-UP) module, that completes a part of functions of a base station. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application.

In embodiments of this application, an apparatus configured to implement a function of the access network device may be an access network device, or may be an apparatus that can support the access network device in implementing the function, for example, a chip system, a hardware circuit, a software module, or a combination of the hardware circuit and the software module. The apparatus may be installed in the access network device or may be used in match with the access network device. In embodiments of this application, the chip system may include a chip, or may include a chip and another discrete component. For ease of descriptions, the following describes the technical solutions provided in this application by using an example in which the apparatus configured to implement the function of the access network device is an access network device and the access network device is a base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

(2) Central unit (central unit, CU) and distributed unit (distributed unit, DU)

An access device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU. This is not limited.

The division into the processing functions of the CU and the DU based on protocol layers is merely an example, and there may be another division manner. For example, the CU or the DU may be divided to have functions of more protocol layers. For another example, the CU or the DU may be further divided to have some processing functions of protocol layers. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When sending is performed, functions of the PHY layer may include at least one of the following: addition of cyclic redundancy check (cyclic redundancy check, CRC) code, channel coding, rate matching, scrambling, modulation, layer mapping, precoding, resource mapping, physical antenna mapping, or radio frequency sending. When receiving is performed, functions of the PHY layer may include at least one of the following: CRC check, channel decoding, de-rate matching, descrambling, demodulation, layer demapping, channel detection, resource demapping, physical antenna demapping, or radio frequency receiving. The higher-layer function of the PHY layer may include some functions of the PHY layer. For example, the some functions are closer to the MAC layer. The lower-layer function of the PHY layer may include some other functions of the PHY layer. For example, the some other functions are closer to a radio frequency function. For example, the higher-layer function of the PHY layer may include addition of CRC code, channel coding, rate matching, scrambling, modulation, and layer mapping, and the lower-layer function of the PHY layer may include precoding, resource mapping, physical antenna mapping, and radio frequency sending. Alternatively, the higher-layer function of the PHY layer may include addition of CRC code, channel coding, rate matching, scrambling, modulation, layer mapping, and precoding. The lower-layer function of the PHY layer may include resource mapping, physical antenna mapping, and radio frequency sending. For example, the higher-layer function of the PHY layer may include CRC check, channel decoding, de-rate matching, decoding, demodulation, and layer demapping, and the lower-layer function of the PHY layer may include channel detection, resource demapping, physical antenna demapping, and radio-frequency receiving. Alternatively, the higher-layer function of the PHY layer may include CRC check, channel decoding, de-rate matching, decoding, demodulation, layer demapping, and channel detection, and the lower-layer function of the PHY layer may include resource demapping, physical antenna demapping, and radio frequency receiving.

For example, the functions of the CU may be implemented by one entity, or may be implemented by different entities. For example, the functions of the CU may be further divided. To be specific, a control plane and a user plane are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. Methods performed by the modules also fall within the protection scope of this application.

The terminal may also be referred to as a terminal device, user equipment (user equipment, UE), a mobile station, a mobile terminal, or the like. The terminal may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, self-driving, telemedicine, a smart grid, smart furniture, smart office, a smart wearable, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

In embodiments of this application, an apparatus configured to implement a function of the terminal may be a terminal; or may be an apparatus that can support the terminal in implementing the function, for example, a chip system, a hardware circuit, a software module, or a combination of the hardware circuit and the software module. The apparatus may be installed in the terminal or may be used in match with the terminal. For ease of descriptions, the following describes the technical solutions provided in this application by using an example in which the apparatus configured to implement the function of the terminal is UE.

The base station and the terminal may be fixed or movable. The base station and/or the terminal may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal, in other words, communication between 110a and 120i is performed based on a radio air interface protocol. 110a and 120i may alternatively communicate with each other based on an interface protocol between base stations. In this case, relative to 110a, 120i is also a base station. Therefore, the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in this application.

In embodiments of this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal may establish a wireless connection to a cell controlled by the base station. The cell that establishes the wireless connection to the terminal is referred to as a serving cell of the terminal. When communicating with the serving cell, the terminal may be interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical uplink control channel (physical uplink control channel, PUCCH) are merely examples of a downlink data channel, a downlink control channel, an uplink data channel, and an uplink control channel. In different systems and different scenarios, a data channel and a control channel may have different names. This is not limited in embodiments of this application.

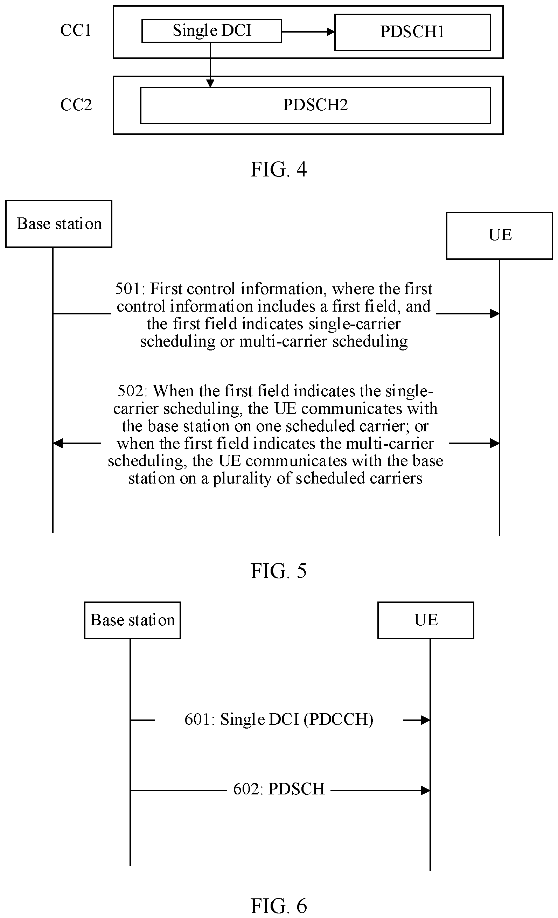

Currently, the UE performs uplink transmission and downlink transmission based on scheduling of the base station. For example, the base station may send a PDCCH to the UE. The PDCCH includes downlink control information (downlink control information, DCI), the DCI may be for scheduling uplink transmission or downlink transmission of the UE, uplink data is included in a PUSCH for transmission, and downlink data is included in a PDSCH for transmission. According to different scheduling manners, scheduling is classified into self-carrier scheduling and cross-carrier scheduling. Optionally, in the descriptions of embodiments of this application, a CC and a carrier are not distinguished, and are interchangeable. In the self-carrier scheduling, DCI and a PDSCH or a PUSCH scheduled by using the DCI are sent on a same component carrier (component carrier, CC). For example, as shown in FIG. 2, DCI is for scheduling a PDSCH. The base station sends the DCI on a CC1, and the DCI is for scheduling a PDSCH1 on the CC1. The base station sends the DCI on a CC2, and the DCI is for scheduling a PDSCH2 on the CC2. In the cross-carrier scheduling, DCI and a PDSCH scheduled by using the DCI are sent on different carriers. For example, as shown in FIG. 3, DCI is for scheduling a PDSCH. The base station sends the DCI on a CC1, and the DCI is for scheduling a PDSCH2 on a CC2. Regardless of the self-carrier scheduling or the cross-carrier scheduling, the DCI supports single-carrier scheduling, in other words, the DCI is for scheduling data transmission on one carrier. If data transmission on a plurality of carriers is scheduled, a plurality of pieces of DCI need to be sent for scheduling, increasing overheads of a control channel. To reduce the overheads of the control channel, a solution of single (single) DCI is proposed, and the single DCI supports both single-carrier scheduling and multi-carrier scheduling. The multi-carrier scheduling is used as an example. As shown in FIG. 4, single DCI is sent on a CC1, and the single DCI is for scheduling a PDSCH1 on the CC1 and a PDSCH2 on a CC2. To enable the UE to learn whether the current single DCI is for single-carrier scheduling or multi-carrier scheduling, in a solution, the base station may send an RRC message to the UE. The RRC message indicates whether subsequent single DCI is for single-carrier scheduling or multi-carrier scheduling. In this solution, the base station needs to additionally send the RRC message to the UE, increasing air interface overheads.

Embodiments of this application provide a communication method. In the method, a field in first control information explicitly or implicitly indicates whether the first control information indicates single-carrier scheduling or multi-carrier scheduling, and no RRC message needs to be additionally sent, to reduce the air interface overheads. Optionally, the first control information may support both the single-carrier scheduling and the multi-carrier scheduling, and the first control information may be single DCI. As shown in FIG. 5, a flowchart is provided. At least the following steps are included.

Step 501: UE receives first control information from a base station, where the first control information includes a first field, and the first field indicates single-carrier scheduling or multi-carrier scheduling.

For example, the first control information may support both the single-carrier scheduling and the multi-carrier scheduling. The first control information may be referred to as first DCI, single DCI, or the like. An example in which the first control information is the single DCI is used for description subsequently. The first field may explicitly or implicitly indicate the single-carrier scheduling or the multi-carrier scheduling. Details are described subsequently.

Step 502: When the first field indicates the single-carrier scheduling, the UE communicates with the base station on one scheduled carrier; or when the first field indicates the multi-carrier scheduling, the UE communicates with the base station on a plurality of scheduled carriers.

In a design, the single DCI may support both single-carrier scheduling and multi-carrier joint scheduling. Values assigned to some fields in the single DCI may be shared by a plurality of carriers, for example, an identifier for DCI formats (identifier for DCI formats) field and a CRC field. Values assigned to some fields in the single DCI need to be independently configured for each carrier, for example, a modulation and coding scheme (modulation and coding scheme, MCS), a redundancy version (redundancy version, RV), and a new data indicator (new data indicator). A field that is independently configured for each carrier in the single DCI may indicate whether the single DCI currently indicates the single-carrier scheduling or the multi-carrier scheduling. In other words, when the first field is a field independently configured for each carrier, the first field included in the single DCI may indicate the single-carrier scheduling or the multi-carrier scheduling.

For example, when the first field includes only one piece of scheduling information, the first field may indicate the single-carrier scheduling, for example, an MCS field, an RV field, or a new data indicator field. For a field independently configured for each carrier, when the single DCI is for scheduling a plurality of carriers, the independently configured field includes information corresponding to each carrier. For example, for an independently configured MCS field, when the single DCI is for scheduling a carrier 1, a carrier 2, and a carrier 3, the MCS field includes information A, information B, and information C. The information A corresponds to a modulation and coding scheme of the carrier 1, the information B corresponds to a modulation and coding scheme of the carrier 2, and the information C corresponds to a modulation and coding scheme of the carrier 3. When the independently configured field in the single DCI includes only one piece of scheduling information, it may be determined that the current single DCI is for scheduling a single carrier. For another carrier, no value is assigned to corresponding information, or a status may be set to a reserved (reserved) state. For example, for an independently configured MSC field, when the MCS field includes information A, the UE may determine that the current single DCI indicates the single-carrier scheduling. Specifically, a carrier on which data transmission is scheduled may be indicated by using a carrier indicator field (carrier indicator field, CIF) in the single DCI. Alternatively, although the independently configured first field includes a plurality of pieces of scheduling information, the plurality of pieces of scheduling information are the same, and it may also be determined that the first field indicates the single-carrier scheduling. For example, the single DCI is for scheduling a carrier 1, and a carrier 2 and a carrier 3 are not scheduled. An MCS, a new data indicator, an RV, or the like that is independently configured in the single DCI may be referred to as a first field. The first field includes scheduling information of the carrier 1, and the scheduling information of the carrier 1 is copied twice and the three pieces of scheduling information are included in the first field. For example, if the scheduling information of the carrier 1 is information A, the first field includes the information A, the information A, and the information A. In this design, although the independently configured field includes the plurality of pieces of scheduling information, the plurality of pieces of scheduling information are the same. For example, the single DCI is for scheduling the carrier 1, and the scheduling information corresponding to the carrier 1 is A. In this case, the independently configured first field may include three pieces of scheduling information, and the three pieces of scheduling information are all A. In other words, for information corresponding to the carrier 2 and the carrier 3, the information corresponding to the carrier 1 is used. The first field indicates the multi-carrier scheduling only when the independently configured first field includes a plurality of pieces of scheduling information and the plurality of pieces of scheduling information are different. For example, when the first field includes three pieces of scheduling information, which are respectively scheduling information A corresponding to a carrier 1, scheduling information B corresponding to a carrier 2, and scheduling information C corresponding to a carrier 3, it is determined that the single DCI is for scheduling the carrier 1, the carrier 2, and the carrier 3.

In a design, a value of the CIF field is 0 bits or 3 bits. When the CIF field is configured as 0 bits, it indicates that the single DCI indicates self-carrier scheduling. When the CIF field is configured as 3 bits, it indicates that the single DCI indicates cross-carrier scheduling, and cross-carrier scheduling of a maximum of eight carriers is supported. In this embodiment of this application, a configuration may be added to the CIF field, and the configuration may be referred to as a target configuration. When bits occupied by the CIF field are a quantity of bits in the target configuration, it may be considered that the current single DCI is for scheduling a plurality of carriers. In a design, when the single DCI supports the multi-carrier scheduling, the CIF field may be configured as 8 bits, and the 8 bits may indicate scheduling of a maximum of 256 carrier combinations. In this embodiment of this application, when the first field is a CIF field, the single-carrier scheduling or the multi-carrier scheduling may be determined based on a size of the CIF field. Optionally, the size of the CIF field may also be referred to as a length of the CIF field, or a quantity of bits occupied by the CIF field. For example, when the size of the CIF field is a first value, the single-carrier scheduling may be determined. The first value may be the foregoing 0 bits or 3 bits. Specifically, when the CIF field is of 0 bits, it may indicate that the single DCI currently indicates self-carrier scheduling. When the CIF field is of 3 bits, it may indicate that the single DCI currently indicates cross-carrier scheduling, and the 3 bits may indicate that cross-carrier scheduling of a maximum of eight carriers is supported. Alternatively, when the size of the CIF field is a second value, the multi-carrier scheduling may be determined. The second value includes but is not limited to 8 bits. For example, the CIF field is of 8 bits. For a correspondence between a value of the CIF field and a multi-carrier scheduling combination, refer to the following Table 1.

**Table 1 Correspondence between a CIF value and a multi-carrier scheduling combination**

| CIF | Scheduling combination | CIF | Scheduling combination |
| --- | --- | --- | --- |
| 00000000 | CC1+CC2 | 00000111 | CC1+CC2 |
| 00000001 | CC1+CC3 | 00001000 | CC1+CC3 |
| 00000010 | CC1+CC4 | 00001001 | CC1+CC4 |
| 00000011 | CC1+CC5 | 00001010 | CC1+CC5 |
| 00000100 | CC1+CC6 | 00001011 | CC1+CC6 |

(continued)

| CIF | Scheduling combination | CIF | Scheduling combination |
|---|---|---|---|
| 00000101 | CC1+CC7 | 00001100 | CC1+CC7 |
| 00000110 | CC1+CC8 | 00001101 | CC1+CC8 |
| ... | ... | ... | ... |

The correspondence between the scheduling combination and the carrier indicator field (CIF) in the DCI shown in Table 1 is configured by using RRC signaling or predefined in a protocol. This is not limited in this application. The carrier indicator field may be an existing CIF field in the DCI, or may be an added field in the DCI, for example, an added co-scheduled cell indicator field.

In the foregoing embodiment, only a co-scheduled indication case in a scheduling set {CC1 to CC8} is considered. When the base station configures a plurality of scheduling sets for the UE, an indicator field in the DCI indicates a specific scheduling combination scheduled by using the current single DCI. In a scenario in which the base station configures the plurality of scheduling sets, the following provides three solutions for indicating a specific scheduling combination in the scheduling set. It may be understood that, in this application, a "co-scheduled cell set" and a "co-scheduled cell combination" are different. The co-scheduled cell set refers to a maximum set configured by the base station for the UE, for example, {CC1 CC2 CC3 CC4}. The co-scheduled cell combination refers to possible scheduling combinations in the set, for example, {CC1 CC2}, {CC3 CC4}, and {CC1 CC3 CC4}, which are all referred to as co-scheduled cell combinations in the co-scheduled cell set. The co-scheduled cell set may also be briefly referred to as a scheduling set, and the co-scheduled cell combination may also be briefly referred to as a scheduling combination.

Solution 1:

When configuring a plurality of co-scheduled cell sets, the base station may configure a corresponding scheduling combination table for each co-scheduled cell set by using RRC signaling, and then indicate, by using the single DCI, a specific co-scheduled cell combination in a co-scheduled cell set that is scheduled by using the current single DCI. For example, the base station configures two co-scheduled cell sets for the UE, which are respectively a set 1 {CC1, CC2, CC3, CC4} and a set 2 {CC5, CC6, CC7, CC8}. A scheduling combination table corresponding to the set 1 is shown in Table 2, and a scheduling combination table corresponding to the set 2 is shown in Table 3. It may be understood that the table in this application may alternatively be implemented in another manner. For example, the table may be replaced with an array or a list. When the table is replaced with the array or the list, rows in the table can be replaced with elements in the array or the list.

**Table 2 Possible scheduling combinations in a co-scheduled cell set 1**

| Index | Co-scheduled cell(s) |
|---|---|
| 1 | Cell 1, cell 2, cell 3, and cell 4 |
| 2 | Cell 1, cell 2, and cell 3 |
| 3 | Cell 3 and cell 4 |
| 4 | Cell 1 and cell 2 |
| 5 | Cell 1 |
| ... | ... |

**Table 3 Possible scheduling combinations in a co-scheduled cell set 2**

| Index | Co-scheduled cell |
|---|---|
| 1 | Cell 5, cell 6, cell 7, and cell 8 |
| 2 | Cell 5, cell 7, and cell 8 |
| 3 | Cell 6 and cell 7 |
| 4 | Cell 5 and cell 8 |
| 5 | Cell 6 |

(continued)

| Index | Co-scheduled cell |
|-------|-------------------|
| ... | ... |

The base station may explicitly configure the co-scheduled cell set for the UE by using RRC signaling, or may implicitly configure the co-scheduled cell set by using RRC signaling. For example, the UE may obtain the co-scheduled cell set by obtaining a union set of possible scheduling combinations in the co-scheduled cell set configured in the RRC signaling. In the foregoing example, a scenario in which no intersection set of co-scheduled cell sets is configured is provided. In some configuration scenarios, there may alternatively be an intersection set between different co-scheduled cell sets, which is not limited herein.

After the base station configures a possible scheduling combination (for example, Table 2 or Table 3) in the co-scheduled cell set for the UE by using the RRC signaling, a scheduling combination in specific scheduling may be indicated by using a specific field in the DCI. The DCI may be used for indication in two manners herein.

- A first indication manner is separate indication: Two fields: a first field and a second field, may be added to the single DCI. The first field indicates a number or an index of the co-scheduled cell set, or indicates a number or an index of a scheduling combination table corresponding to the co-scheduled cell set. The second field indicates a number or an index of a co-scheduled cell combination in the co-scheduled cell set indicated by the first field. Alternatively, the first field is added, and a current field such as a CIF field may be reused for the second field. A specific indication manner is as the design in Table 1.
- A second indication manner is joint indication: A "co-scheduled cell indicator" field may be added, and the field occupies M+N bits in total. M high-order bits of the field indicate a number or an index of the co-scheduled cell set, or indicate a number or an index of a scheduling combination table corresponding to the co-scheduled cell set, and N low-order bits of the field indicate a number or an index of a co-scheduled cell combination in the co-scheduled cell set.

In this application, different scheduling sets may be associated with different n_CI values. n_CI is configured by using RRC signaling herein, and indicates a start position of a control channel element (control channel element, CCE) of a search space corresponding to DCI in a blind detection process. To avoid a resource conflict, different co-scheduled cell sets correspond to different n_CI values. It may be understood that n_CI may also have another name. For example, to distinguish from existing n_CI, n_MI may be used to indicate a start position of a CCE of a search space corresponding to single DCI in a blind detection process.

Solution 2:

When configuring a plurality of co-scheduled cell sets, the base station may configure a common scheduling combination table for all the co-scheduled cell sets by using RRC signaling, as shown in Table 4. A co-scheduled cell combination indicated by each row in Table 4 includes cells in a same co-scheduled cell set, in other words, one co-scheduled cell combination does not cross two co-scheduled cell sets.

**Table 4**

| Index | Co-scheduled cell(s) |
|-------|----------------------|
| 1 | Cell 1, cell 2, cell 3, and cell 4 |
| 2 | Cell 1, cell 2, and cell 3 |
| 3 | Cell 3 and cell 4 |
| 4 | Cell 1 and cell 2 |
| 5 | Cell 1 |
| 6 | Cell 5, cell 6, cell 7, and cell 8 |
| 7 | Cell 5, cell 7, and cell 8 |
| 8 | Cell 6 and cell 7 |
| 9 | Cell 5 and cell 8 |
| 10 | Cell 6 |

(continued)

| Index | Co-scheduled cell(s) |
|-------|---------------------|
| ... | ... |

After configuring the scheduling combination table for the UE by using the RRC signaling, the base station indicates, by newly adding a "co-scheduled cell indicator" field to the DCI or reusing a "CIF" field, an index corresponding to a row of co-scheduled cell combinations in the scheduling combination table.

Solution 3:

When a plurality of co-scheduled cell sets are configured, the RRC signaling may be for configuring different scheduling combination tables for different co-scheduled cell sets. If a large quantity of scheduling combination tables are configured, to reduce indication overheads of a DCI field, a range may be narrowed down by using media access control (media access control, MAC) control element (control element, CE) signaling. For example, if the RRC signaling is for configuring N scheduling combination tables for N co-scheduled cell sets respectively, the base station may deliver an indication by using the MAC CE signaling, for example, may indicate that M scheduling combination tables in the N scheduling combination tables are for single DCI joint scheduling, where M is a positive integer less than N.

For an indication manner of the DCI, refer to the design in the foregoing solution 1. When M is greater than 1, a specific DCI indication manner may be any one of the two indication manners in the solution 1. When M is equal to 1, the MAC CE signaling completes a function of the first field in the first indication manner in the solution 1. In this case, the base station may indicate a number or an index of a co-scheduled cell combination in the co-scheduled cell set by using the second field in the DCI.

Alternatively, the first field includes a bitmap (bitmap), and the bitmap may indicate the single-carrier scheduling or the multi-carrier scheduling. For example, a field such as a multi-carrier indicator field (multi-carrier indicator field, MIF) field may be added to the single DCI, and the field may specifically indicate, in a bitmap manner, which fields are jointly scheduled. For example, an 8-bit byte is defined, and corresponds to eight carriers. A value of each bit of the 8-bit byte may be 0 or 1. When the value is 0, it indicates that the corresponding carriers are not jointly scheduled by using the single DCI. When the value is 1, it indicates that the corresponding carriers are jointly scheduled by using the single DCI. It may be understood that, when values in the 8-bit byte include one 0 and seven 1s, it indicates that the current single DCI is for scheduling a single carrier. The specific scheduled single carrier is a carrier corresponding to a byte whose value is 1.

Alternatively, a scheduling manner is bound to a bandwidth part (bandwidth part, BWP), a BWP of the single-carrier scheduling and a BWP of the multi-carrier scheduling are preconfigured, and dynamic switching between a single-carrier scheduling function and a multi-carrier scheduling function is implemented through BWP switching. For example, the first field is a BWP indicator field. When receiving the single DCI, the UE determines a first BWP included in a BWP indicator (bandwidth part indicator) field included in the single DCI, and determines, based on a correspondence between a BWP and a scheduling manner, that a scheduling manner corresponding to the first BWP is the single-carrier scheduling, the multi-carrier scheduling, or the like. The correspondence between the BWP and the scheduling manner is pre-configured. For example, the base station pre-configures the correspondence between the BWP and the scheduling manner for the UE by using signaling such as RRC signaling or MAC control element (control element, CE). Alternatively, the correspondence between the BWP and the scheduling manner is preset, or is specified in a protocol. This is not limited. For example, a correspondence between a BWPO and a single-carrier scheduling manner, and a correspondence between a BWP1 and a multi-carrier scheduling manner are pre-established. When a value assigned to the BWP indicator field in the single DCI is 0, the UE may be indicated to switch to the BWPO for data transmission. Because there is the correspondence between the BWPO and the single-carrier scheduling, it may be implicitly indicated that the single DCI is for single-carrier scheduling. Alternatively, when a value assigned to the BWP indicator field in the single DCI is 1, the UE may be indicated to switch to the BWP1 for data transmission. Because there is the correspondence between the BWP1 and the multi-carrier scheduling, it may be implicitly indicated that the single DCI is for multi-carrier scheduling. A BWP is a group of consecutive resource block (resource block, RB) resources on a carrier. A plurality of BWPs may be configured for each CC of one piece of UE. At each moment, there is at least one active BWP in one CC, and the active BWP is for actually sending or receiving data. When the single DCI indicates a single-carrier scheduling manner, similar to the foregoing descriptions, a CIF field may be used to indicate a specific scheduled single carrier. When the single DCI indicates a multi-carrier scheduling manner, assistance of other information may be required to determine which carriers are specifically scheduled. For example, the base station may send another piece of control information, where the control information may be a MAC CE, DCI, or the like, and the control information may indicate which carriers are specifically scheduled by using the single DCI. Alternatively, the CIF field may be extended, and a specific scheduled carrier is indicated by using the CIF field, or the like. This is not limited. It should be noted that in the foregoing descriptions, an example in which the first field is a BWP is used for description, and this is not limited. For example, a correspondence between a value assigned to another field and a scheduling manner may be established. Dynamic switching of the scheduling manner may be implicitly indicated by indicating the value assigned to the field.

An example in which the procedure in FIG. 5 is applied to downlink scheduling is used. As shown in FIG. 6, a flowchart is provided. At least the following steps are included.

Step 601: A base station allocates, based on a channel status reported by UE and information such as a UE capability, a downlink time-frequency resource to the UE, and indicates scheduling information to the UE through a PDCCH.

The PDCCH indicates the scheduling information, and the scheduling information includes single DCI. Alternatively, it is described as that the single DCI is transmitted in the PDCCH, and the PDCCH is a control channel or the like for transmitting the single DCI. The single DCI may be for scheduling one carrier, or may be for jointly scheduling a plurality of carriers. In downlink scheduling, a value assigned to an identifier for DCI formats (identifier for DCI formats) field in the single DCI is 1, and the field indicates uplink scheduling transmission or downlink scheduling transmission. When the downlink scheduling transmission is indicated, the value assigned to the identifier for DCI formats field is 1. When the uplink scheduling transmission is indicated, the value assigned to the identifier for DCI formats field is 0. Currently, the single DCI specifically indicates single-carrier scheduling or multi-carrier scheduling, and there are the following several implementations.

When the single DCI currently indicates the single-carrier scheduling, no value is assigned to a special field of an unscheduled carrier. As described above, some fields in the single DCI may be shared by a plurality of carriers, and some fields need to be independently configured for each carrier. The special field may be a field independently configured for each carrier, for example, a field such as an MCS, a new data indicator, or an RV. For a field independently configured for each carrier in the single DCI, when a plurality of carriers are scheduled, the field needs to include scheduling information corresponding to each of the plurality of carriers. In this example, when the single-carrier scheduling is indicated, the field independently configured for each carrier includes scheduling information of a single carrier. Alternatively, the special field of the unscheduled carrier uses a value of a field corresponding to a scheduled carrier. For example, if the single DCI is for scheduling only a carrier 1, fields that need to be separately indicated in a carrier 2 and a carrier 3 use a value corresponding to the carrier 1. In this case, it may indicate that the carrier 2 and the carrier 3 are not scheduled, and only the carrier 1 is scheduled. Alternatively, a scheduling manner is bound to a BWP, and dynamic switching between a single carrier and a plurality of carriers is implemented through BWP switching. For example, for a BWP indicator field, when a value assigned to the BWP indicator field is 0, it may indicate that the single DCI is for scheduling a single carrier.

When it is indicated that the single DCI is for the multi-carrier scheduling, a scheduling function is bound to a BWP, and dynamic switching between a single carrier and a plurality of carriers is implemented through BWP switching. For example, for a BWP indicator field, when a value assigned to the field is 1, it may indicate that the single DCI is for jointly scheduling a plurality of carriers; or during multi-carrier scheduling, a special field in the single DCI, for example, a CIF field, may be used to indicate a combination of jointly scheduled carriers. For example, eight bits are allocated for the CIF field, and the eight bits may indicate 256 combinations of jointly scheduled carriers, as shown in Table 1. Alternatively, during multi-carrier scheduling, a field such as an MIF field may be added to the single DCI, and the MIF field may indicate a jointly scheduled carrier in a bitmap manner. Alternatively, similar to the CIF field, a correspondence between a bit and a carrier combination may be established in advance. The MIF field may indicate different multi-carrier combinations by carrying different bit information, or the like. This is not limited. Alternatively, during multi-carrier scheduling, the base station may send one piece of control information to indicate which carriers are jointly scheduled.

Step 602: The base station sends downlink data on a PDSCH resource allocated to the UE, and the UE demodulates the downlink data based on received indication information, where the indication information may be information carried in the single DCI, for example, an MCS.

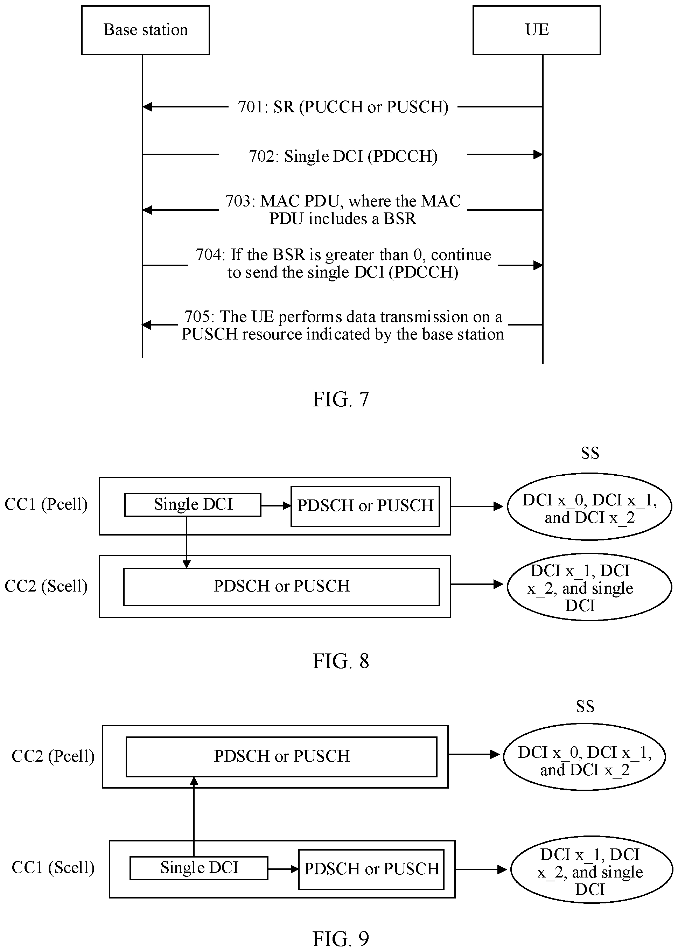

An example in which the procedure in FIG. 5 is applied to uplink scheduling is used. As shown in FIG. 7, a flowchart is provided. At least the following steps are included.

Step 701: When UE needs to send uplink data, the UE may send a scheduling request (scheduling request, SR) to a base station on a PUCCH or PUSCH channel, to request an uplink grant from the base station.

Step 702: When receiving the SR, the base station responds to the SR, and sends scheduling information to the UE through a PDCCH.

Step 703: When receiving the scheduling information, the UE sends a MAC protocol data unit (protocol data unit, PDU) on a resource allocated by the base station, where the MAC PDU includes information such as a buffer status report (buffer status report, BSR).

Step 704: If the BSR received by the base station is greater than 0, the base station continues to schedule the UE, and send the scheduling information to the UE through the PDCCH.

Step 705: The UE performs data transmission on a PUSCH resource indicated by the base station.

In the foregoing step 702 and step 704, the base station sends the scheduling information to the UE through the PDCCH. The scheduling information may be included in single DCI, and the single DCI may support functions of both single-carrier scheduling and multi-carrier joint scheduling. In other words, the single DCI may be for scheduling a PUSCH on only one carrier, or may be for jointly scheduling PUSCHs on a plurality of carriers. In uplink scheduling, an identifier for DCI format field in the single DCI is set to 0, which indicates that uplink scheduling transmission is currently performed. In this embodiment of this application, for an implementation in which the single DCI specifically indicates the single-carrier scheduling or the multi-carrier joint scheduling at different moments, refer to the implementation of the foregoing downlink scheduling process. Details are not described again.

In the foregoing method, the single DCI supports both the single-carrier scheduling and the multi-carrier joint scheduling, and how the single DCI indicates the single-carrier or multi-carrier scheduling function at different moments is designed. In addition, in this design, the base station does not need to separately send RRC to indicate the single-carrier scheduling or the multi-carrier scheduling, so that the single-carrier scheduling or the multi-carrier scheduling of the single DCI is explicitly or implicitly indicated with small control information overheads, to improve a downlink capacity.

After the UE completes initial access, the base station may configure a control resource set (control resource set, CORESET) and a search space (search space, SS) for the UE by using the RRC, and the UE continuously monitors a position corresponding to the SS. In a design, a quantity of different payload sizes of DCI monitored by the UE in each slot does not exceed 4, and a quantity of payload sizes of DCI for which CRC is scrambled by using a cell radio network temporary identifier (cell radio network temporary identifier, C-RNTI) does not exceed 3. The payload size of the DCI may also be referred to as a size (size) of the DCI. Currently, legacy (legacy) DCI includes DCI x_0, DCI x_1, and DCI x_2. The three types of DCI are all scrambled by using a C-RNTI, and sizes of the three types of DCI are respectively a size A, a size B, and a size C. In this embodiment of this application, because the single DCI is introduced, there are four different DCI sizes (sizes). This is inconsistent with the foregoing design. To resolve the foregoing problem, this application provides the following solutions.

In a first solution, it is designed that the UE does not simultaneously monitor the DCI x_1 and the single DCI. Because the single DCI can implement a function of the DCI x_1, when the single DCI is introduced, it may be designed that DCI monitored by the UE in the SS is the DCI x_0, the DCI x_2, and the single DCI, and the single DCI is scrambled by using a C-RNTI. For example, the base station may send an RRC message to the UE. The RRC message is for configuring an SS for a terminal. The SS includes first control information or second control information. The first control information is DCI that supports both single-carrier scheduling and multi-carrier joint scheduling. The second control information is DCI that supports single-carrier scheduling. For example, the first control information may be the single DCI, the second control information may be the DCI x_0, and both the first control information and the second control information are scrambled by using a C-RNTI.

An initial access process of the UE is used as an example. A process in which the UE monitors the DCI includes:

Step 1: The UE obtains, through synchronization signal and PBCH block (synchronization signal and PBCH block, SSB) scanning, a CORESET0 indicated by a master information block (master information block, MIB), and obtains scheduling information of a corresponding system information block 1 (system information block1, SIB1) through blind detection, to complete initial access.

Step 2: After the initial access is completed, the base station configures CORESETs and SSs by using RRC, and the UE continuously monitors positions corresponding to the SSs. In a design, one piece of UE supports monitoring of DCI that is scrambled by using C-RNTIs and that is of a maximum of three sizes. When the single DCI is introduced, there are four different DCI sizes. In this solution, to meet a limitation on a quantity of blindly detected DCI sizes in the foregoing design, because the single DCI includes a function of legacy DCI x_1, the legacy DCI x_1 is replaced with the single DCI, in other words, it is specified that the UE does not simultaneously monitor the DCI x_1 and the single DCI. In this case, the DCI monitored by the UE includes the DCI x_0, the DCI x_2, and the single DCI.

Step 3: The UE performs a blind detection attempt of CRC in a PDCCH candidate set by monitoring the DCI, finds DCI belonging to the UE, and completes blind detection.

In a second solution, to maintain a current design, a solution in which the single DCI is scrambled in a non-C-RNTI manner is designed. In this case, the UE simultaneously monitors the single DCI and the legacy DCI, in other words, the UE simultaneously monitors the single DCI, the DCI x_0, the DCI x_1, and the DCI x_2. For example, the base station may send an RRC message to the UE. The RRC message includes first control information and second control information. The first control information may be scrambled in a manner other than a C-RNTI. The second control information may be scrambled by using a C-RNTI. The first control information may be the single DCI, and the second control information may be the legacy DCI.

In the second solution, downlink scheduling is used as an example, and the following descriptions are provided: For a downlink scheduling procedure, refer to the foregoing descriptions in FIG. 6. In the second solution, in the foregoing step 601, the base station sends a PDCCH to indicate scheduling information, where the scheduling information is included in the single DCI. The single DCI undergoes CRC scrambling, polar (polar) coding, speed matching, scrambling, quadrature phase shift keying (quadrature phase shift keying, QPSK) modulation, pre-grouping, power control, resource mapping, precoding, beamforming, time domain processing, intermediate radio frequency processing, and other processes, and is sent to the UE through the PDCCH. In a CRC scrambling process, 16-bit CRC is scrambled by using a radio network temporary identifier (radio network temporary identifier, RNTI). In the second solution, to meet the foregoing design, the single DCI is scrambled in a non-C-RNTI scrambling manner. The non-C-RNTI may be represented as an X-RNTI. The X-RNTI is mainly for dynamic joint scheduling of a plurality of carriers for transmission. A corresponding transmission channel is a downlink-shared channel (downlink-shared channel, DL-SCH) or an uplink-shared channel (uplink-shared channel, UL-SCH), and a corresponding logical channel is a dedicated control channel (dedicated control channel, DCCH). In the foregoing step 601, because the single DCI mainly supports the joint scheduling of the plurality of carriers and is not scrambled by using a C-RNTI, the single DCI does not occupy a constraint of blind detection by the UE that "sizes of DCI scrambled by using the C-RNTI does not exceed 3". The single-carrier scheduling and the multi-carrier scheduling may be respectively associated with different DCI formats. The base station may send different DCI formats to implement whether to select a single-carrier scheduling manner or a multi-carrier joint scheduling manner in different slots. Specifically, the base station determines, based on measurement information fed back by the UE, to use the single-carrier scheduling manner or the multi-carrier scheduling manner. If it is determined that the single-carrier scheduling manner is used, the UE sends the legacy DCI in a next slot. If it is determined that the multi-carrier scheduling manner is used, the single DCI is sent in a next slot. For example, in a current slot, the UE sends the single DCI to jointly schedule a plurality of carriers. If the measurement information fed back by the terminal is less than a threshold, it indicates that coverage performance of a current position of the UE is poor. In a next slot, the base station may send the legacy DCI for single-carrier scheduling to improve the coverage performance. A payload size of the single DCI is greater than a payload size of the legacy DCI, and a larger payload size of the DCI indicates poorer coverage performance. Therefore, when the coverage performance of the position of the UE is poor, the legacy DCI may be sent to improve the coverage performance.

The foregoing second solution is described by using initial access of the UE as an example.

Step 1: The UE may obtain, through SSB scanning, a CORESET 0 indicated by a MIB, and obtain corresponding scheduling information of a SIB through blind detection, to complete initial access.

Step 2: After the initial access is completed, the base station may configure CORESETs and SSs by using an RRC message, and the UE continuously monitors positions of the SSs. In a design, one piece of UE supports monitoring of DCI that is scrambled by using C-RNTIs and that is of a maximum of three sizes and monitoring of DCI that is scrambled by using another RNTI and that is of a maximum of one size. In this design, because the single DCI is not scrambled by using the C-RNTI, the terminal may simultaneously monitor the legacy DCI and the single DCI.

Step 3: The UE performs a blind detection attempt of CRC in a PDCCH candidate set through monitoring, finds DCI belonging to the UE, and completes blind detection.

In this design, joint scheduling of a plurality of carriers is implemented by using the single DCI, and a manner in which the single DCI is scrambled by using a C-RNTI is restricted, so that the UE can simultaneously monitor the legacy DCI and the single DCI.

In a third solution, a DCI size (size) budget (budget) is defined on each carrier. When the single DCI is for multi-carrier scheduling, it is considered that the DCI x_0 is not monitored on a secondary carrier. In the design of this application, the DCI x_1, the DCI x_2, and the single DCI may be monitored on the secondary carrier. The DCI x_0, the DCI x_1, and the DCI x_2 may be monitored on a primary carrier. For example, the base station sends an RRC message to the UE, where the RRC message includes an SS scheduled for the UE. When a plurality of carriers scheduled by using the single DCI include a primary carrier and a secondary carrier, the SS includes an SS of the primary carrier and an SS of the secondary carrier. The SS of the primary carrier includes second control information. The second control information may include the DCI x_0, the DCI x_1, the DCI x_2, and the like. The SS of the secondary carrier includes the first control information and third control information. The first control information may include the single DCI, and the third control information includes the DCI x_1 and the DCI x_2. The first control information, the second control information, and the third control information are all scrambled by using a C-RNTI.

For example, as shown in FIG. 8, the single DCI is sent on a carrier 1, and the single DCI is for jointly scheduling the carrier 1 and a carrier 2. In a carrier aggregation (carrier aggregation, CA) or non-CA scenario, the carrier 1 corresponds to a primary cell (primary cell, Pcell), and may be referred to as a primary carrier, and the carrier 2 corresponds to a secondary carrier (secondary cell, Scell), and may be referred to as a secondary carrier. Considering that the DCI x_0 is not monitored on the Scell, a blind detection budget of the single DCI may be for the carrier 2. In this case, the UE monitors the DCI x_0, the DCI x_1, and the DCI x_2 on the SS corresponding to the carrier 1 (corresponding to the Pcell), and monitors the DCI x_1, the DCI x_2, and the single DCI on the carrier 2 (corresponding to the Scell).

Alternatively, as shown in FIG. 9, the single DCI is sent on a carrier 1, and the carrier 1 and a carrier 2 are jointly scheduled. In a CA or non-CA scenario, if the carrier 1 corresponds to an Scell and the carrier 2 corresponds to a Pcell, considering that the DCI x_0 is not monitored on the Scell, a blind detection budget of the single DCI is for the scheduled carrier 1. The UE monitors the DCI x_1, the DCI x_2, and the single DCI on an SS corresponding to the carrier 1, and monitors the DCI x_0, the DCI x_1, and the DCI x_2 on an SS corresponding to the carrier 2.

In a fourth solution, a budget for multi-carrier scheduling is jointly defined, and is a total budget quantity of a plurality of jointly scheduled carriers plus 1. If the single DCI is for jointly scheduling two carriers, a maximum of seven formats of DCI scrambled by using a C-RNTI can be blindly detected on the two carriers, in other words, a maximum value of formats of DCI that is scrambled by using a C-RNTI and that are blindly detected on the two carriers is 7. Optionally, there are the following several implementations.

It is set that the single DCI is sent on a carrier 1, and the single DCI is for scheduling two carriers. Only one DCI size budget is added for the two jointly scheduled carriers, and the budget may be for the carrier 1 or a carrier 2. If the added DCI size budget is for the carrier 1, a budget of the single DCI is included in a blind detection budget of the carrier 1, and the UE monitors DCI that is scrambled by using a C-RNTI and that is of a maximum of four sizes on an SS corresponding to the carrier 2. Similarly, if the added DCI size budget is for the carrier 2, a budget of the single DCI is included in a blind detection budget of the carrier 2, and the UE monitors DCI that is scrambled by using a C-RNTI and that is of a maximum of four sizes on an SS corresponding to the carrier 2. In this case, the single DCI may be scrambled by using a C-RNTI.

In a fifth solution, a DCI size budget is separately defined on each carrier, and a DCI size budget is added on each carrier, and is changed from original "3+1" to "4+1". In other words, the UE may monitor DCI that is scrambled by using a C-RNTI and that is of four sizes and DCI that is scrambled by using a non-C-RNTI and that is of one size on each carrier. In this case, the single DCI may be scrambled by using a C-RNTI.

According to the foregoing design, a DCI size budget rule for multi-carrier joint scheduling is redefined, so that after the single DCI is introduced, a blind decoding budget of a PDCCH is not exceeded.

In a sixth solution, in this solution, the specification of the current design in which a quantity of different payload sizes of DCI monitored by the UE in each slot does not exceed 4, and a quantity of payload sizes of DCI for which CRC is scrambled by using the C-RNTI does not exceed 3 is still used. In this solution, the UE may be configured to simultaneously monitor the single DCI and the legacy DCI. When the UE simultaneously monitors the single DCI and the legacy DCI, which is beyond the specification in the current design, the UE may choose to monitor the single DCI, and no longer monitor the legacy DCI. For example, the base station sends an RRC message to the UE. The RRC message includes an SS configured for the UE. The SS includes the first control information and second control information. The first control information supports both single-carrier scheduling and multi-carrier joint scheduling. The first control information may be single DCI. The second control information supports single-carrier scheduling. The second control information may be legacy DCI.

Optionally, before step 501 in FIG. 5, the method may further include: The base station defines a new search space for a plurality of carriers jointly scheduled by using the single DCI, to reduce complexity of blind detection of the UE.

Currently, before the UE performs blind detection, the UE may learn, based on the search space and a CORESET associated with the search space, information such as time-frequency resource information of a PDCCH, a scheduling periodicity, an aggregation level that may be sent by the PDCCH, and a quantity of times of blind detection required for each aggregation level. Therefore, the UE may determine each PDCCH candidate set based on the foregoing information and with reference to a blind detection formula, and decode each candidate set. Once the decoding succeeds, a blind detection procedure is stopped.

To determine a position of each PDCCH candidate set, position information of an initial control-channel element (control-channel element, CCE) needs to be known, that is, $CCE_{start}$. To determine an initial CCE position, refer to the following blind detection formula 1:

$$\mathrm{CCE_{start}} = \mathrm{L} \cdot \left\{ \left( Y_{p,n_{s,f}^\mu} + \left\lfloor \frac{m_{s,n_{CI}} \cdot N_{CCE,p}}{L \cdot M_{p,s,max}^{(L)}} \right\rfloor + n_{CI} \right) mod \left\lfloor \frac{N_{CCE,p}}{L} \right\rfloor \right\} + i$$

(blind detection formula 1)

L represents a PDCCH aggregation level, where for a common search space, L = {4,8,16}, and for a UE-specific search space, L = {1,2,4,8,16}; $Y_{p,n_{s,f}^\mu}$ represents a frequency domain start position of the PDCCH candidate set; $N_{CCE,p}$ represents a quantity of CCEs in a p$^{th}$ CORESET; $m_{s,n_{CI}}$ represents a quantity of PDCCH candidate sets of corresponding $n_{CI}$ and a corresponding search space at an aggregation level of L; $M_{p,s,max}^{(L)}$ represents a maximum quantity of candidate sets in the p$^{th}$ CORESET and an s$^{th}$ search space at the aggregation level of L; $n_{CI}$ represents a cross-carrier indication for ensuring that a frequency domain conflict is avoided when PDCCH candidate sets on carriers with different subcarrier spacings are scheduled, and is indicated by a configured CIF in a cross-carrier scheduling configuration (CrossCarrierSchedulingConfi) of higher layer signaling, and if the CIF is not configured, $n_{CI}$ is 0; and *i* represents a CCE index (index) at the aggregation level of L, where i = 0,1, ..., L - 1.

The initial position of the CCE may be calculated according to the foregoing formula, and the position of the PDCCH may be further determined. In this case, the UE performs decoding. It can be seen that, when the search space corresponding to the cross-carrier scheduling is determined, the search space is mainly identified by $n_{CI}$. To avoid a CCE position conflict during multi-carrier joint scheduling, a solution is to define a specific search space for the multi-carrier joint scheduling, and introduce a new identifier, that is, $n_{MI}$, which indicates a carrier combination number for joint scheduling. For example, when a CC1 and a CC2 are jointly scheduled by using the single DCI, a value is 1; and when the CC1 and a CC3 are jointly scheduled, a value is 2. A specific value of $n_{MI}$ is configured by using higher layer RRC signaling. For details, refer to the following blind detection formula 2:

$$\text{CCE}_{\text{start}} = \text{L} \cdot \left\{ \left( Y_{p,n_{s,f}^\mu} + \left\lceil \frac{m_{s,n_{CI}} \cdot N_{CCE,p}}{L \cdot M_{p,s,max}^{(L)}} \right\rceil + n_{CI} + n_{MI} \right) mod \left\lfloor \frac{N_{CCE,p}}{L} \right\rfloor \right\} + i$$

(blind detection formula 2)

$n_{MI}$ is introduced, so that the specific search space can be defined for the multi-carrier joint scheduling, thereby effectively avoiding a resource configuration conflict in frequency domain. In this design, the base station may configure $n_{MI}$ for the UE by using RRC signaling. The UE determines the initial CCE position based on $n_{MI}$ and with reference to the foregoing blind detection formula 2, and further determines the PDCCH candidate set based on the initial CCE position. The PDCCH candidate set includes all PDCCH resources that may be used to send the single DCI. A set of the PDCCH candidate sets is referred to as a search space. In this design, the UE may perform blind detection in the search space by using CRC corresponding to the single DCI, to reduce complexity of blind detection of the UE.

In another solution, the current identifier $n_{CI}$ of cross-carrier scheduling identifier is reused, but a new meaning needs to be added for $n_{CI}$. Currently, a maximum of three bits can be configured for $n_{CI}$, that is, a maximum value is 7. To additionally indicate the search space for multi-carrier joint scheduling, a quantity of bits needs to be increased for the search space. An optional configuration value is 8 bits, in other words, a value ranging from 8 to 255 may be used to distinguish a corresponding CCE start position for multi-carrier joint scheduling. For example, when $n_{CI}$ indicates the value ranging from 8 and 255, the value ranging from 8 and 255 may be substituted into the foregoing blind detection formula 1, to determine the CCE start position; the PDCCH candidate set is determined based on the CCE start position; and the search space is determined based on the PDCCH candidate set. The UE performs blind detection in the search space by using the CRC corresponding to the single DCI, to reduce complexity of blind detection of the UE.

In the foregoing solution, the complexity of blind detection can be reduced, and a CCE resource configuration conflict can be avoided when a frequency domain position of a PDCCH is determined. It should be noted that the foregoing solution for reducing the complexity of blind detection of the UE may be used in combination with the solutions in FIG. 5 to FIG. 9, or may be used independently, which is not limited.

It may be understood that, to implement functions in the foregoing methods, the base station and the terminal include corresponding hardware structures and/or software modules for performing the functions. A person skilled in the art should be easily aware that, with reference to units and method steps in the examples described in embodiments of this application, this application can be implemented by hardware or a combination of hardware and computer software. Whether a function is performed by hardware or hardware driven by computer software depends on particular application scenarios and design constraints of the technical solutions.

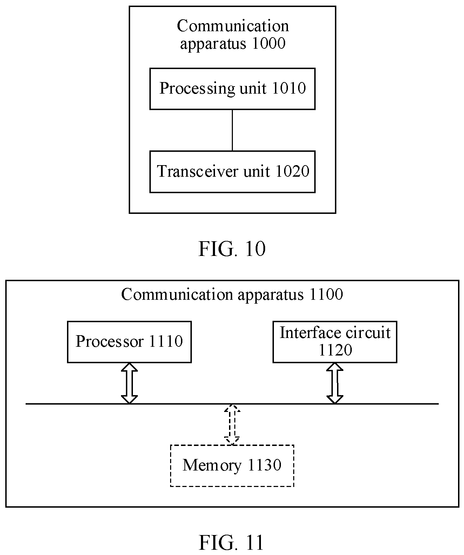

FIG. 10 and FIG. 11 each are a diagram of a structure of a possible communication apparatus according to this application. These communication apparatuses may be configured to implement functions of the terminal or the base station in the foregoing methods, and therefore can also implement beneficial effect of the foregoing methods. In this embodiment of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 10, a communication apparatus 1000 includes a processing unit 1010 and a transceiver unit 1020. The communication apparatus 1000 is configured to implement the functions of the terminal or the base station in the foregoing method embodiments.

When the communication apparatus 1000 is configured to implement the functions of the terminal in the foregoing method embodiments, the transceiver unit 1020 is configured to receive first control information from a network device. The first control information supports both single-carrier scheduling and multi-carrier scheduling. The first control information includes a first field. The first field indicates the single-carrier scheduling or the multi-carrier scheduling. The processing unit 1010 is configured to: when the first field indicates the single-carrier scheduling, communicate with the network device on one scheduled carrier; or when the first field indicates the multi-carrier scheduling, communicate with the network device on a plurality of scheduled carriers.

When the communication apparatus 1000 is configured to implement the functions of the base station in the foregoing method embodiment, the transceiver unit 1020 is configured to send first control information to a terminal. The first control information supports both single-carrier scheduling and multi-carrier scheduling. The first control information includes a first field. The first field indicates the single-carrier scheduling or the multi-carrier scheduling. The processing unit 1010 is configured to: when the first field indicates the single-carrier scheduling, communicate with the terminal on one scheduled carrier; or when the first field indicates the multi-carrier scheduling, communicate with the terminal on a plurality of scheduled carriers.

For more detailed descriptions about the processing unit 1010 and the transceiver unit 1020, directly refer to related descriptions in the foregoing method embodiments. Details are not described herein.

As shown in FIG. 11, a communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions to be executed by the processor 1110, input data required by the processor 1110 to run instructions, or data generated after the processor 1110 runs instructions.

When the communication apparatus 1100 is configured to implement the foregoing method, the processor 1110 is configured to implement the functions of the processing unit 1010, and the interface circuit 1120 is configured to implement the functions of the transceiver unit 1020.

When the communication apparatus is a chip used in a terminal, the terminal chip implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory in this application may be a random access memory, a flash memory, a read-only memory, a programmable read-only memory, an erasable programmable read-only memory, an electrically erasable programmable read-only memory, a register, a hard disk drive, a removable hard disk drive, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal device. Certainly, the processor and the storage medium may alternatively exist in a base station or a terminal device as discrete components.

Methods in this application may be wholly or partially implemented by software, hardware, firmware, or any combination thereof. When the software is used for implementations, all or a part of the embodiments may be implemented in a form of a computer program product. The computer program product includes one or more computer programs or instructions. When the computer programs or instructions are loaded and executed on the computer, the procedure or functions according to this application are completely or partially generated. The computer may be a general-purpose computer, a dedicated computer, a computer network, a network device, user equipment, a core network device, OAM, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between associated objects. In a formula in this application, the character "/" indicates a "division" relationship between associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

**Claims**

1. A communication method, comprising:

   receiving first control information from a network device, wherein the first control information supports both single-carrier scheduling and multi-carrier scheduling, the first control information comprises a first field, and the first field indicates the single-carrier scheduling or the multi-carrier scheduling; and
   when the first field indicates the single-carrier scheduling, communicating with the network device on one scheduled carrier; or
   when the first field indicates the multi-carrier scheduling, communicating with the network device on a plurality of scheduled carriers.

2. The method according to claim 1, wherein the first field is a field independently configured for each carrier, and when the first field comprises one piece of scheduling information, the first field indicates the single-carrier scheduling;

   when the first field comprises a plurality of pieces of scheduling information, and the plurality of pieces of scheduling information are the same, the first field indicates the single-carrier scheduling; or
   when the first field comprises a plurality of pieces of scheduling information, and the plurality of pieces of scheduling information are different, the first field indicates the multi-carrier scheduling.

3. The method according to claim 1 or 2, wherein the first field is a carrier indicator field, and the single-carrier scheduling or the multi-carrier scheduling is determined based on a size of the carrier indicator field.

4. The method according to claim 1 or 2, wherein the first field comprises a bitmap, and the bitmap indicates the multi-carrier scheduling or the single-carrier scheduling.

5. The method according to claim 1 or 2, wherein the first field is a bandwidth part BWP indicator field, and the BWP indicator field indicates a first BWP; and the method further comprises: determining that a scheduling manner corresponding to the first BWP is the single-carrier scheduling or the multi-carrier scheduling.

6. The method according to any one of claims 1 to 5, wherein before the receiving first control information from a network device, the method further comprises:
   receiving a radio resource control message from the network device, wherein the radio resource control message comprises a search space configured for a terminal, the search space comprises the first control information and second control information, and the second control information supports the single-carrier scheduling.

7. A communication method, comprising:

   sending first control information to a terminal, wherein the first control information supports both single-carrier scheduling and multi-carrier scheduling, the first control information comprises a first field, and the first field indicates the single-carrier scheduling or the multi-carrier scheduling; and
   when the first field indicates the single-carrier scheduling, communicating with the terminal on one scheduled carrier; or
   when the first field indicates the multi-carrier scheduling, communicating with the terminal on a plurality of scheduled carriers.

8. The method according to claim 7, wherein the first field is a field independently configured for each carrier, and when the first field comprises one piece of scheduling information, the first field indicates the single-carrier scheduling;

   when the first field comprises a plurality of pieces of scheduling information, and the plurality of pieces of scheduling information are the same, the first field indicates the single-carrier scheduling; or
   when the first field comprises a plurality of pieces of scheduling information, and the plurality of pieces of scheduling information are different, the first field indicates the multi-carrier scheduling.

9. The method according to claim 7 or 8, wherein the first field is a carrier indicator field, and the single-carrier scheduling or the multi-carrier scheduling is indicated based on a size of the carrier indicator field.

10. The method according to claim 7 or 8, wherein the first field comprises a bitmap, and the bitmap indicates the single-carrier scheduling or the multi-carrier scheduling.

11. The method according to claim 7 or 8, wherein the first field is a bandwidth part BWP indicator field, the BWP indicator field indicates a first BWP, and a scheduling manner corresponding to the first BWP is the single-carrier scheduling or the multi-carrier scheduling.

12. The method according to any one of claims 7 to 11, wherein before the sending first control information to a terminal, the method further comprises:

    sending a radio resource control message to the terminal, wherein the radio resource control message comprises a search space configured for the terminal, wherein
    the search space comprises the first control information or second control information, the second control information is control information that supports the single-carrier scheduling, and both the first control information and the second control information are scrambled by using a cell radio network temporary identifier C-RNTI;
    the search space comprises the first control information and second control information, the first control information is scrambled in a manner other than a C-RNTI, and the second control information is scrambled by using a C-RNTI; or
    a plurality of carriers scheduled by using the first control information comprise a primary carrier and a secondary carrier, the search space comprises a search space of the primary carrier and a search space of the secondary carrier, the search space of the primary carrier comprises second control information, the search space of the secondary carrier comprises the first control information and third control information, and the first control information, the second control information, and the third control information are all scrambled by using a C-RNTI.

13. A communication apparatus, comprising a unit configured to implement the method according to any one of claims 1 to 6.

14. A communication apparatus, comprising a processor and a memory, wherein the processor is coupled to the memory, and the processor is configured to implement the method according to any one of claims 1 to 6.

15. A communication apparatus, comprising a unit configured to implement the method according to any one of claims 7 to 12.

16. A communication apparatus, comprising a processor and a memory, wherein the processor is coupled to the memory, and the processor is configured to implement the method according to any one of claims 7 to 12.

17. A communication system, comprising the apparatus according to claim 13 or 14 and the apparatus according to claim 15 or 16.

18. A computer-readable storage medium, wherein the computer-readable storage medium stores a computer program or instructions; and when the computer program or the instructions are run on a computer, the computer is enabled to perform the method according to any one of claims 1 to 6, or the method according to any one of claims 7 to 12.

19. A computer program product, wherein the computer program product comprises a computer program or instructions; and when the computer program or the instructions are run on a computer, the computer is enabled to perform the method according to any one of claims 1 to 6, or the method according to any one of claims 7 to 12.

20. A chip system, comprising a processor or a circuit, configured to perform the method according to any one of claims 1 to 6, or the method according to any one of claims 7 to 12.

FIG. 1

FIG. 2

FIG. 3

| CC1 | Single DCI | → | PDSCH1 |

| CC2 | PDSCH2 |

**FIG. 4**

```
Base station                                              UE

        501: First control information, where the first
        control information includes a first field, and
             the first field indicates single-carrier
              scheduling or multi-carrier scheduling


        502: When the first field indicates the single-
         carrier scheduling, the UE communicates with
          the base station on one scheduled carrier; or
         when the first field indicates the multi-carrier
         scheduling, the UE communicates with the base
          station on a plurality of scheduled carriers
```

**FIG. 5**

```
Base station                                              UE


             601: Single DCI (PDCCH)  →


             602: PDSCH  →
```

**FIG. 6**

| Base station | | UE |
|---|---|---|

701: SR (PUCCH or PUSCH)

702: Single DCI (PDCCH)

703: MAC PDU, where the MAC PDU includes a BSR

704: If the BSR is greater than 0, continue to send the single DCI (PDCCH)

705: The UE performs data transmission on a PUSCH resource indicated by the base station

FIG. 7

SS

CC1 (Pcell) | Single DCI → PDSCH or PUSCH → DCI x_0, DCI x_1, and DCI x_2

CC2 (Scell) | PDSCH or PUSCH → DCI x_1, DCI x_2, and single DCI

FIG. 8

SS

CC2 (Pcell) | PDSCH or PUSCH → DCI x_0, DCI x_1, and DCI x_2

CC1 (Scell) | Single DCI → PDSCH or PUSCH → DCI x_1, DCI x_2, and single DCI

FIG. 9

Communication
apparatus 1000

Processing unit 1010

Transceiver unit 1020

FIG. 10

Communication apparatus 1100

Processor 1110

Interface circuit
1120

Memory 1130

FIG. 11

## INTERNATIONAL SEARCH REPORT

International application No.

**PCT/CN2023/090045**

### A. CLASSIFICATION OF SUBJECT MATTER

H04L5/00(2006.01)i;  H04L27/26(2006.01)i;  H04W 28/02(2009.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

WPABS, VEN, CNTXT, ENTXT, CNKI: 网络设备, 终端, 控制信息, 调度, 联合, 单载波, 多载波, 字段, 指示, 部分带宽, 无线资源控制消息; network, device, terminal, DCI, schedule, association, single-carrier, multiple-carrier, field, indication, BWP, RRC

### C. DOCUMENTS CONSIDERED TO BE RELEVANT

| Category* | Citation of document, with indication, where appropriate, of the relevant passages | Relevant to claim No. |
|---|---|---|
| X | CN 113595696 A (HUAWEI TECHNOLOGIES CO., LTD.) 02 November 2021 (2021-11-02) description, paragraphs 0118-0174 | 1-20 |
| X | CN 101601246 A (QUALCOMM INC.) 09 December 2009 (2009-12-09) claims 1-56 | 1-20 |
| A | CN 101959234 A (TD TECH COMMUNICATION TECHNOLOGIES LTD.) 26 January 2011 (2011-01-26) entire document | 1-20 |
| A | CN 111934829 A (HUAWEI TECHNOLOGIES CO., LTD.) 13 November 2020 (2020-11-13) entire document | 1-20 |
| A | CN 113727440 A (HUAWEI TECHNOLOGIES CO., LTD.) 30 November 2021 (2021-11-30) entire document | 1-20 |
| A | US 2012099676 A1 (SONY CORPORATION) 26 April 2012 (2012-04-26) entire document | 1-20 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2023** | **11 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/090045**

| Patent document cited in search report | | | Publication date (day/month/year) | Patent family member(s) | | | Publication date (day/month/year) |
|---|---|---|---|---|---|---|---|
| CN | 113595696 | A | 02 November 2021 | WO | 2021218559 | A1 | 04 November 2021 |
| | | | | EP | 4135452 | A1 | 15 February 2023 |
| | | | | US | 2023053143 | A1 | 16 February 2023 |
| CN | 101601246 | A | 09 December 2009 | DK | 2078402 | T3 | 07 May 2012 |
| | | | | BRPI | 0717962 | A2 | 05 November 2013 |
| | | | | PL | 2078402 | T3 | 31 May 2012 |
| | | | | JP | 2010508791 | A | 18 March 2010 |
| | | | | ES | 2376368 | T3 | 13 March 2012 |
| | | | | AT | 540509 | T | 15 January 2012 |
| | | | | US | 2010091919 | A1 | 15 April 2010 |
| | | | | WO | 2008057969 | A2 | 15 May 2008 |
| | | | | TW | 200835255 | A | 16 August 2008 |
| | | | | PT | 2078402 | E | 30 March 2012 |
| | | | | EP | 2369803 | A1 | 28 September 2011 |
| | | | | CA | 2667011 | A1 | 15 May 2008 |
| | | | | KR | 20090074824 | A | 07 July 2009 |
| | | | | RU | 2009120546 | A | 10 December 2010 |
| CN | 101959234 | A | 26 January 2011 | None | | | |
| CN | 111934829 | A | 13 November 2020 | WO | 2020228609 | A1 | 19 November 2020 |
| | | | | EP | 3952193 | A1 | 09 February 2022 |
| | | | | US | 2022060992 | A1 | 24 February 2022 |
| CN | 113727440 | A | 30 November 2021 | WO | 2021238786 | A1 | 02 December 2021 |
| | | | | EP | 4142403 | A1 | 01 March 2023 |
| US | 2012099676 | A1 | 26 April 2012 | JP | 2012094952 | A | 17 May 2012 |
| | | | | JP | 5720927 | B2 | 20 May 2015 |
| | | | | US | 8761279 | B2 | 24 June 2014 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210455026X

- CN 202211379928